# EUROPEAN PATENT APPLICATION

(11) **EP 4 847 796 A1**
(43) Date of publication of application: **02.12.2026**
(21) Application number: 26175321.4
(22) Date of filing: 29.04.2026
(51) Int. Cl.: F16F 9/46, F16K 27/02, F16K 31/06, F16K 31/40

(54) **A SOLENOID VALVE AND A SHOCK ABSORBER HAVING THE SOLENOID VALVE**

(30) Priority: 28.05.2025 CN 202521082309 U
(71) Applicant: Johnson Electric Motion Technology (Changzhou) Co. Ltd., Changzhou, Jiangsu 213166 (CN)
(72) Inventor: DABHADE, Kiran V., Hong Kong (CN); WANG, Jingxuan, Changzhou (CN); BOUWMEESTER, Luke, Toronto (CA); MORTON, Paul, Oakville (CA); GU, Minjun, Changzhou (CN)
(74) Representative: Doherty, William

(57) **Abstract**

The invention relates to a solenoid valve and a shock absorber having the solenoid valve, which can simplify the structure of the solenoid valve and simplify the assembly of the solenoid valve. The solenoid valve includes a movable spool (31) housed within a valve sleeve (21) and capable of axial reciprocating motion relative to the valve sleeve (21); the outer peripheral wall of the movable spool (31) is formed with groove(s) (31a) that extends axially and penetrates axially through the movable spool (31); a first cavity (26) and a second cavity (27) located on opposite sides of the movable spool (31), axially separated and both in communication with the groove(s) (31a); a pin (33) connected to the movable spool (31), capable of axial reciprocating motion with the movable spool (31), and having the function of a valve core, the pin (33) comprises an axial through-hole (35) that extends axially through the pin (33) but outside of and separate from the groove(s) (31a), and a radial hole (35a) extending radially outward from the pin (33) to connect the axial through-hole (35) with the second cavity (27); and a pilot chamber (76) located on the side of the pin (33) away from the movable spool (31) and capable of communicating with the axial through-hole (35a).

## Description

### TECHNICAL FIELD

The present application relates to a solenoid valve and a shock absorber having the solenoid valve, and in particular to a CDC(Continuous Damping Control) solenoid valve and a CDC shock absorber having the CDC solenoid valve.

### BACKGROUND

The solenoid valve of an automobile realizes continuous damping control by adjusting, at a high frequency, the pressure of the working fluid inside a shock absorber, so that when the automobile is running, continuous damping control can be carried out in a timely manner according to vehicle speed, road conditions, etc., thereby improving the running stability, comfort, and safety of the automobile. At present, the solenoid valve includes a pilot spool accommodated in a pilot chamber; a rod which is separate from the pilot spool and used to drive the pilot spool to move axially; a movable spool which is fixed with the rod by an annular riveting process and is capable of reciprocating in the axial direction; a bearing sleeved on the upper end of the rod; and an accommodating chamber formed between the bearing and the movable spool. There are through holes formed in the pilot spool, the rod, and the bearing, which can communicate the pilot chamber with the accommodating chamber, so that when the movable spool drives the rod to move, the working fluid in the pilot chamber can flow into the accommodating chamber through the through holes, thereby reducing the influence of the working fluid during the movement of the movable spool and the rod. However, the structure and assembly of solenoid valves are complex.

### SUMMARY

The present application provides a solenoid valve and a shock absorber having the solenoid valve, which can simplify the structure of the solenoid valve and simplify the assembly of the solenoid valve.

Therefore, the first aspect of the present application provides a solenoid valve comprising a valve sleeve, characterized in that the solenoid valve further comprises: a movable spool housed within the valve sleeve and capable of axial reciprocating motion relative to the valve sleeve; the outer peripheral wall of the movable spool is formed with groove(s) that extends axially and penetrates axially through the movable spool; a first cavity and a second cavity located on opposite sides of the movable spool, axially separated and both in communication with the groove(s); a pin connected to the movable spool, capable of axial reciprocating motion with the movable spool, and having the function of a valve core, the pin comprises an axial through-hole that extends axially through the pin but outside of and separate from the groove(s), and a radial hole extending radially outward from the pin to connect the axial through-hole with the second cavity; a pilot chamber located on the side of the pin away from the movable spool and capable of communicating with the axial through-hole; wherein the axial through-hole, the radial hole, the second cavity, and the groove(s) together form a passage that connects the first cavity with the pilot chamber, allowing working fluid to flow through the passage between the pilot chamber and the first cavity as the movable spool and the pin move.

The solenoid valve may have one or more of the following characteristics, alone or in combination.

In some embodiments, the valve sleeve comprises a closed axial end, the first cavity is jointly defined by the closed axial end of the valve sleeve and the movable spool.

In some embodiments, the radial hole is provided at the connection position between the pin and the movable spool, and is accommodated in the second cavity.

In some embodiments, the solenoid valve further comprises a valve housing that forms the pilot chamber, the valve housing comprises a through hole extending axially through the valve housing, the pin comprises a rod which is disposed in the axial direction, fixed to the movable spool and passes through the through hole; the rod comprises a tail end connected to the movable spool, and a head end with a diameter smaller than the tail end, such that a first shoulder is formed at the connection position between the head end and the tail end, the maximum outer diameter of the first shoulder is greater than the inner diameter of the through hole, so that the first shoulder can limit the distance by which the movable spool moves away from the valve sleeve.

In some embodiments, the solenoid valve further comprises a valve housing, the valve housing comprises a through hole extending axially through the valve housing, the pin comprises a rod which is disposed in the axial direction, fixed to the movable spool and passes through the through hole, and a pin head extending from the rod; the pin head comprises a pressurizing portion whose outer diameter gradually increases along the axial direction from where it continues from the rod, the maximum outer diameter of the pressurizing portion is greater than the inner diameter of the through hole, so that the pressurizing portion can limit the distance by which the movable spool moves toward the valve sleeve.

In some embodiments, the tail end of the valve sleeve comprises an inner protrusion formed by the end face of the tail end of the valve sleeve protruding inward in the axial direction, and the inner protrusion is configured to limit the distance by which the movable spool moves toward the valve sleeve.

In some embodiments, the size of the first cavity increases as the movable spool moves away from the tail end of the valve sleeve, and the size of the second cavity decreases as the movable spool moves away from the tail end of the valve sleeve, so as to maintain the total volume of the first cavity and the second cavity unchanged or reduce the rate of change of the total volume; the groove(s) are two or more in number and arranged at intervals along the circumference of the movable spool.

In some embodiments, the solenoid valve further comprises: a valve housing that forms the pilot chamber, the valve housing comprises a through hole extending axially through the valve housing; a valve member with a valve-seat function accommodated in the valve housing, the valve member comprises a cap body, which has an open end and accommodates the pin head, and a brim which extends radially outward around the opening of the cap body and is continuous with the cap body, the opening of the cap body facing the through hole; and a second elastic element which abuts against the brim in a compressed state, so that the brim is axially pressed against the valve housing.

In some embodiments, the solenoid valve further comprises a sealing element, and the valve housing further comprises an annular limiting portion that extends axially from the valve housing, is accommodated in the cap body, and abuts against the cap body in a sealed state via the sealing element; the limiting portion and the cap body together form an accommodating space for accommodating the pin head.

The second aspect of the present application provides a shock absorber comprising the solenoid valve provided in the first aspect of the present application.

In the solenoid valve of the present application, the pin connected to the movable spool serves as a valve core, and is in communication with the groove(s) on the movable spool via an axial through-hole formed in the pin, so that the pilot chamber is in communication with a first cavity located on the side of the movable spool away from the pin. Therefore, when the movable spool and the pin move, the working fluid can flow between the pilot chamber and the first cavity, reducing the influence of the working fluid during the movement of the movable spool and the pin. In this way, the influence of the working fluid during movement of the movable spool and the pin can be reduced by means of a simple structure, thereby simplifying the structure of the solenoid valve and simplifying assembly of the solenoid valve.

### BRIEF DESCRIPTION OF THE DRAWINGS

In order to more clearly illustrate the technical solutions of the embodiments of the present application, the drawings required for use in the embodiments of the present application will be briefly introduced below. Obviously, the drawings described below are only some embodiments of the present application. For those skilled in the art, other drawings can be obtained based on these drawings without creative effort.
[Fig.1] is a perspective schematic diagram of the solenoid valve in the present application;
[Fig.2] is perspective schematic diagram of the solenoid valve shown in Fig. 1;
[Fig.3] is a schematic sectional diagram taken along line A-A of the solenoid valve shown in Fig. 2;
[Fig.4] is a schematic diagram of partial components of the solenoid valve shown in Fig. 1, showing the valve sleeve, pin, sealing gasket, and valve member;
[Fig.5] is an exploded diagram of the assembly shown in Fig. 4;
[Fig.6] is a schematic diagram of the assembly shown in Fig. 4;
[Fig.7] is a schematic sectional diagram taken along line B-B of the solenoid valve shown in Fig. 6.

### DETAILED DESCRIPTION

In order to facilitate the understanding of the present application, the present application is described in more detail below in conjunction with the accompanying drawings and specific embodiments. Obviously, the described embodiments are only some embodiments of the present application, and not all embodiments.

It should be noted that when an element is described as being "fixed to" another element, it may be directly on the other element, or one or more intervening elements may be present therebetween. When an element is said to be "connected to" another element, it can be directly connected to the other element, or one or more intervening elements may be present therebetween. The terms "vertical", "horizontal", "left", "right" and the like are used in this specification for illustrative purposes only and do not represent the only possible implementation.

Unless otherwise defined, all technical and scientific terms used in this specification have the same meanings as commonly understood by one of ordinary skill in the art to which this application belongs. The terms used in this specification and in the specification of this application are only for the purpose of describing specific embodiments and are not intended to limit this application. The term "and/or" used in this specification includes any and all combinations of one or more of the associated listed items.

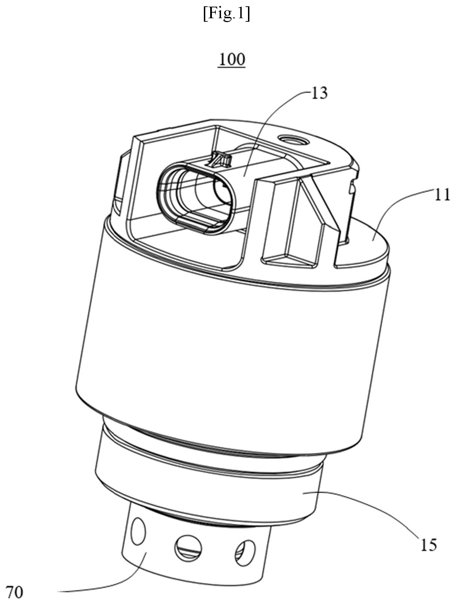

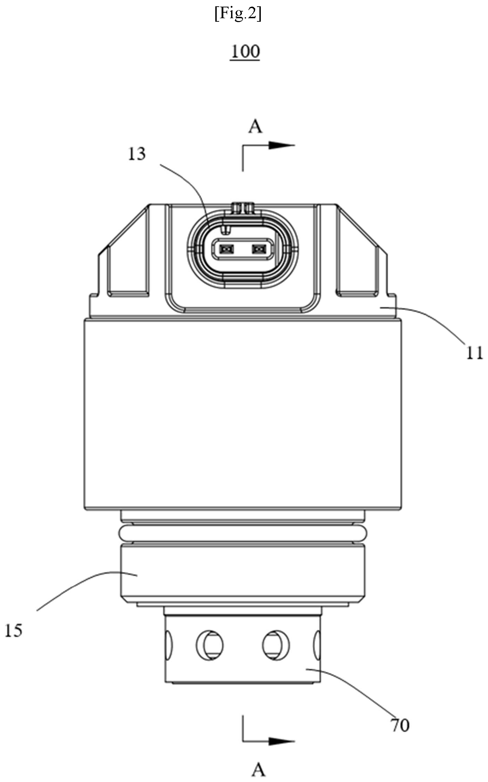

Referring to Figures 1 and 2, a solenoid valve 100 provided in one embodiment of the present application includes a shell 11, a connector 13 fixed to one end of the shell 11, a cover 15 fixed to the other end of the shell 11, and a valve housing 70 inserted into one end of the cover 15. The shell 11 is equipped with a movable spool (not shown in Figure 1). The connector 13 is used to connect with an external power source.

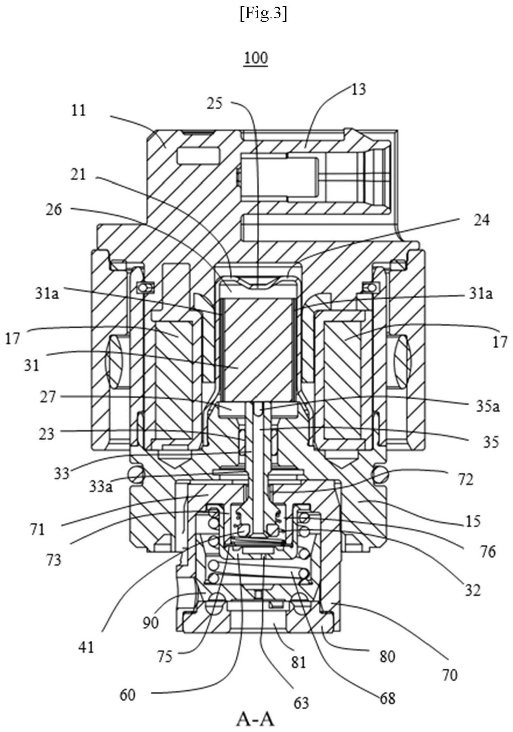

Referring to Figures 2 and 3, the solenoid valve 100 includes a coil 17 fixed inside the shell 11. The coil 17 is electrically connected to the terminals installed inside the connector 13. When the solenoid valve 100 is powered on, the coil 17 is connected to an external power source through the connector 13 and generates a magnetic field.

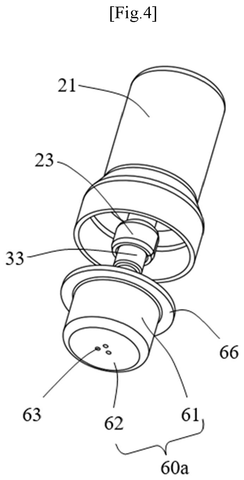

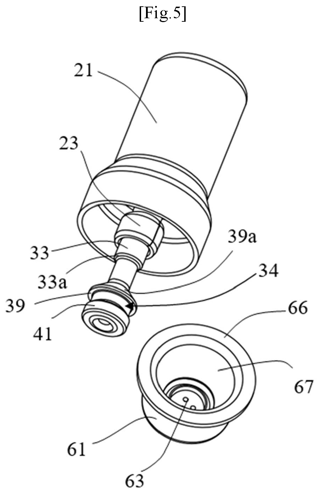

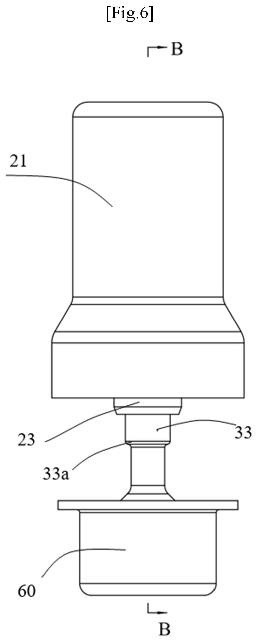

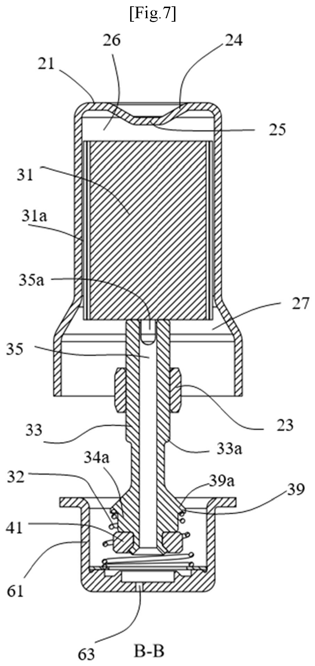

Referring to Figures 3, 4, 5, 6, and 7, the solenoid valve 100 further comprises a valve sleeve 21 fixed within the shell 11, a movable spool 31 housed within the valve sleeve 21 and capable of axial reciprocating motion relative to the valve sleeve 21, and a pin 33 connected to the movable spool 31 and capable of axial reciprocating motion with the movable spool 31. The valve sleeve 21 comprises an open axial end and a closed axial end 24. Through the open axial end, the pin 33 extends out from the valve sleeve 21. The tail end of the valve sleeve 21 comprises an inner protrusion 25 formed by the end face of the tail end of the valve sleeve 21 protruding inward in the axial direction, and the inner protrusion 25 is configured to limit the distance by which the movable spool 31 moves toward the valve sleeve 21. In this embodiment, the inner protrusion 25 limits the distance of the movable spool 31 moves toward the closed axial end 24 of the valve sleeve 21. When the tail end of the movable spool 31 abuts against the inner protrusion 25 or maintains a certain distance from the inner protrusion 25, the first cavity 26 is jointly defined by the closed axial end 24 of the valve sleeve 21, the inner protrusion 25, and the movable spool 31, and the shape of the first cavity 26 is similar to an annular body. When the tail end of the movable spool 31 does not abut against the inner protrusion 25, the shape of the first cavity 26 is equivalent to adding a cylindrical cavity section to the aforementioned annular body. In this embodiment, the closed axial end 24 is located at the tail end of the valve sleeve 21.

In this embodiment, the movable spool 31 is used to be driven by the magnetic field generated by the coil 17 to perform axial movement within the valve sleeve 21. The outer peripheral wall of the movable spool 31 is formed with groove(s) 31a that extends axially and penetrates axially through the movable spool 31. In this embodiment, there are two or more grooves 31a arranged at intervals along the circumferential direction of the movable spool 31.

Located on opposite sides of the movable spool 31, the solenoid valve 100 defines a first cavity 26 and a second cavity 27, which are axially separated and both in communication with the groove(s) 31a. In other words, the solenoid valve 100 further includes a first cavity 26 and a second cavity 27, which are axially spaced apart on opposite sides of the movable spool 31 and both in communication with the groove(s) 31a. The first cavity 26 is located on the side of the movable spool 31 away from the pin 33. The first cavity 26 is jointly defined by the closed axial end 24 of the valve sleeve 21 and the movable spool 31. The size of the first cavity 26 increases as the movable spool 31 moves away from the tail end of the valve sleeve 21. The second cavity 27 is jointly defined by the movable spool 31 and the cover 15. The size of the second cavity 27 decreases as the movable spool 31 moves away from the tail end of the valve sleeve 21, so as to maintain the total volume of the first cavity 26 and the second cavity 27 unchanged or reduce the rate of change of the total volume. It can be understood that the size of the first cavity 26 decreases as the movable spool 31 moves toward the tail end of the valve sleeve 21, while the size of the second cavity 27 increases as the movable spool 31 moves toward the tail end of the valve sleeve 21.

The pin 33 comprises an axial through-hole 35 that extends axially through the pin 33 but outside of and separate from the groove(s) 31a, and a radial hole 35a extending radially outward from the pin 33 to connect the axial through-hole 35 with the second cavity 27. Thus, the radial through-hole 35 is in communication with the first cavity 26 through the radial hole 35a, the second cavity 27, and the groove(s) 31a. In this embodiment, the radial hole 35a is provided at the connection position between the pin 33 and the movable spool 31, and is accommodated in the second cavity 27. It can be understood that the radial hole 35a may also be provided at other positions, as long as the radial hole 35a can communicate with the axial through-hole 35 of the pin 33 and with the second cavity 27. This application does not limit this.

The pin 33 comprises a rod disposed in the axial direction and fixed to the movable spool 31, and a pin head 34 extending from the rod. The rod of the pin 33 passes through the cover 15 thereby accommodating the pin head 34 in the valve housing 70. In this embodiment, the valve housing 70 comprises a through hole 72 extending axially through the valve housing 70. Specifically, the valve housing 70 is a housing with one axial end open and the other axial end closed. The valve housing 70 includes an axial end plate 71 through which the pin 33 passes, and the through hole 72 is formed on the axial end plate 71 that extends axially and penetrates the axial end plate 71. The rod of the pin 33 also passes through the through hole 72 so that the pin head 34 is accommodated in the valve housing 70. In this embodiment, the rod of the pin 33 is supported by a bushing 23 installed in the cover 15 for axial movement.

The rod of the pin 33 comprises a tail end connected to the movable spool 31, and a head end with a diameter smaller than the tail end, such that a first shoulder 33a is formed at the connection position between the head end and the tail end. The maximum outer diameter of the first shoulder 33a is greater than the inner diameter of the through hole 72, so that the first shoulder 33a can limit the distance by which the movable spool 31 moves away from the valve sleeve 21. In this embodiment, the first shoulder 33a can limit the distance by which the movable spool 31 moves away from the closed axial end 24 of the valve sleeve 21. In this embodiment, the cover 15 also can limit the distance by which the movable spool 31 moves away from the valve sleeve 21. It can be understood that the way of limiting the distance that the movable spool 31 moves toward the valve sleeve 21 can be any one of the first shoulder 33a and the cover 15, or a combination of the first shoulder 33a and the cover 15. This application does not limit this. It can be understood that the maximum outer diameter of the first shoulder 33a can be smaller than the inner diameter of the through hole 72, allowing the first shoulder 33a to move axially within the through hole 72. This application does not limit this.

In this embodiment, the pin 33 has a valve core function, so the displacement of the pin head 34 is directly affected by the electromagnetic force of the solenoid valve 100. On the side of the pin 33 away from the movable spool 31, that is, at the position of the pin head 34, a pilot chamber 76 is also formed in the solenoid valve 100, which is in communicated with the axial through-hole 35. That is to say, the solenoid valve 100 also comprises a pilot chamber 76 located on the side of the pin 33 away from the movable spool 31 and capable of communicating with the axial through-hole 35. In this embodiment, the pilot chamber 76 is formed inside the valve housing 70. The axial through-hole 35, the radial hole 35a, the second cavity 27, and the groove(s) 31a together form a passage that allows the first cavity 26 to communicate with the pilot chamber 76, allowing working fluid to flow through the passage between the pilot chamber 76 and the first cavity 26 as the movable spool 31 and the pin 33 move.

The pin head 34 comprises a pressurizing portion 39a whose outer diameter gradually increases along the axial direction from where it continues from the rod, the maximum outer diameter of the pressurizing portion 39a is greater than the inner diameter of the through hole 72, so that the pressurizing portion 39a can limit the distance by which the movable spool 31 moves toward the valve sleeve 21. It can be understood that the way of limiting the distance that the movable spool 31 moves toward the valve sleeve 21 can be one of the above-mentioned inner protrusion 25 and the pressurizing portion 39a, or a combination of the inner protrusion 25 and the pressurizing portion 39a. This application does not impose any limitation in this regard.

The pin head 34 also includes a second shoulder 39 formed by a continuation of the pressurizing portion 39a with a reduced outer diameter. In this embodiment, the pin head 34 further includes a connection part 34a, which continues from the pressurizing portion 39a with a reduced outer diameter, and the second shoulder 39 is formed at the connection position between the connection part 34a with the pressurizing portion 39a.

In this embodiment, the solenoid valve 100 further includes a sealing gasket 41 installed to the pin head 34, and a first elastic element 32 that abuts against the second shoulder 39 and is used to provide a reset force to the pin 33 when the solenoid valve is not powered. In this embodiment, the sealing gasket 41 has an annular structure and protrudes radially outward from the connection part 34a. In this embodiment, the first elastic element 32 is a conical coil spring or a cylindrical coil spring, such that the first elastic element 32 surrounds the outside of the sealing gasket 41 when the first elastic element 32 abuts against the second shoulder 39 and the valve member 60.

When the solenoid valve 100 is powered on, the movable spool 31 overcomes the reset force of the first elastic element 32 and moves axially relative to the valve sleeve 21. Specifically, the movable spool 31 moves axially toward the cover 15, causing the volume of the first cavity 26 to increase and the volume of the second cavity 27 to decrease. At the same time, the movable spool 31 drives the pin 33 to move in the same direction as the movable spool 31. During this process, the pin 33 compresses the first elastic element 32. Since the axial through-hole 35, the radial hole 35a, the second cavity 27, and the groove(s) 31a together form a passage that allows the first cavity 26 to communicate with the pilot chamber 76, the working fluid in the pilot chamber 76 flows into the first cavity 26 through the axial through-hole 35, the radial hole 35a, the second cavity 27, and the groove(s) 31a until the movement of the movable spool 31 away from the closed axial end 24 of the valve sleeve 21 is restricted by the sealing gasket 41 and the valve member 60.

When the solenoid valve 100 is powered off, under the reset force of the first elastic element 32, the pin 33 moves axially towards the valve sleeve 21, driving the movable spool 31 to move in the same direction as the pin 33, causing the volume of the first cavity 26 to decrease and the volume of the second cavity 27 to increase. Similarly, since the axial through-hole 35, the radial hole 35a, the second cavity 27, and the groove(s) 31a together form a passage that allows the first cavity 26 communicate with the pilot chamber 76, during this process, the working fluid in the first cavity 26 flows into the pilot chamber 76 through the groove(s) 31a, the second cavity 27, the radial hole 35a and the axial through-hole 35 until the movable spool 31 is reset or the movement of the movable spool 31 towards the closed axial end 24 of the valve sleeve 21 is restricted by the inner protrusion 25 and/or the pressurizing portion 39a.

Referring to Figures 3, 4, and 5, in this embodiment, the solenoid valve 100 further includes a valve member 60 with a valve seat function accommodated in the valve housing 70, and a second elastic element 68 that abuts against the valve member 60 in a compressed state.

In this embodiment, the other end of the first elastic element 32 is pressed against the valve member 60. A fluid-passing hole 63 is formed on the valve member 60. The fluid-passing hole 63 can be blocked by the sealing gasket 41. In this embodiment, the valve member 60 has a cap-shaped structure. The valve member 60 comprises a cap body 60a, which has an open end and accommodates the pin head 34, and a brim 66 which extends radially outward around the opening of the cap body 60a and is continuous with the cap body 60a. The cap body 60a forms the pilot chamber 76. The opening of the cap body 60a faces the through hole 72. In this embodiment, the opening of the cap body 60a also faces away the fluid-passing hole 63. The first elastic element 32 and the pin head 34 are accommodated in the cap body 60a, and the axial through-hole 35 is in communication with the fluid-passing hole 63 or the pilot chamber 76. When the fluid-passing hole 63 is blocked by the sealing gasket 41, the axial through-hole 35 is in communication with the liquid passage hole 63. When the fluid-passing hole 63 is not sealed by the sealing gasket 41, the axial through-hole 35 is in communication with the pilot chamber 76.

In this embodiment, the cap body 60a has a structure with one axial end open and the other axial end closed. The cap body 60a includes an annular wall 61 and a connection plate 62 connected to one axial end of the annular wall 61. The annular wall 61 and the connection plate 62 together form an accommodating chamber 67 with an open end for accommodating the first elastic element 32 and the pin head 34. The fluid-passing hole 63 is provided on the connection plate 62 and extends through the connection plate 62 along the axial direction. In this embodiment, one end of the first elastic element 32 is pressed against the connection plate 62, and the other end is pressed against the second shoulder 39 of the pin head 34.

In this embodiment, the second elastic element 68 is pressed against the brim 66 in a compressed state, so that the brim 66 is pressed against the axial end plate 71. In this embodiment, the force applied by the second elastic element 68 to the brim 66 is greater than the force applied by the first elastic element 32 to the valve member 60 when the solenoid valve 100 is not energized. Therefore, when the solenoid valve 100 is not powered, the valve member 60 can be confined within the valve housing 70. The force applied by the second elastic element 68 to the brim 66 is greater than the force applied by the pin 33 to the valve member 60 when the solenoid valve 100 is powered on. In this embodiment, the force applied by the second elastic element 68 to the brim 66 is greater than or equal to the sum of the force applied by the pin 33 through the sealing gasket 41 to the valve element 60 when the solenoid valve 100 is powered on and the force applied by the first elastic element 32 on the valve element 60 when the solenoid valve 100 is powered on. Therefore, when the solenoid valve is powered, the valve member 60 can also be confined within valve housing 70.

The solenoid valve 100 further includes a sealing element 75, which is disposed in the cap body 60a. In this embodiment, the sealing element 75 is a sealing ring and is provided on the connecting plate 62. It can be understood that the sealing element 75 can also be a gasket spring, etc., and this application does not limit this. The sealing element 75 is used to seal the gap between the valve member 60 and the valve housing 70. Specifically, the valve housing 70 further includes an annular limiting portion 73 that extends axially from the valve housing 70 and is accommodated in the cap body 60a, and is sealed against the cap body 60a through the sealing element 75 in a sealed state. In this embodiment, the limiting portion 73 extends axially from the axial end plate 71 into the accommodating chamber 67. The limiting portion 73 and the cap body 60a together form an accommodating space for receiving the pin head 34. In this embodiment, the limiting portion 73 and the cap body 60a jointly form the pilot chamber 76. Through the sealing element 75, the limiting portion 73 abuts against the cap body 60a in a sealed state, that is, the limiting portion 73 is in a sealed state against the cap body 60a via the sealing element 75. Therefore, the present application can prevent the working fluid from flowing out of the accommodating chamber 67 through the gap between the limiting portion 73 and the cap body 60a and the gap between the brim 66 and the axial end plate 71.

The solenoid valve 100 further includes a main valve, which includes a main valve seat 80 and an open-close section 90. The main valve seat 80 is pressed into and fixed to the open axial end of the valve housing 70 in a roughly sealed state. A passage 81 is formed on the main valve seat 80 that runs through along the axial direction. The open-close section 90 can perform axial reciprocating motion within the valve housing 70 and come into contact or separate from the main valve seat 80 to achieve the opening and closing of the main valve. When the open-close section 90 comes into contact with the main valve seat 80, the main valve is in a closed state, and the working fluid cannot flow out of the solenoid valve 100 through the gap between the open-close section 90 and the main valve seat 80. When the open-close section 90 is separated from the main valve seat 80, the main valve is in an open state, and the working fluid can flow out of the solenoid valve 100 through the gap between the open-close section 90 and the main valve seat 80. In this embodiment, the second elastic element 68 is pressed against the brim 66 and open-close section 90 in a compressed state. The open-close section 90 can automatically come into contact with or separate from the main valve seat 80 according to the pressure of the working fluid in the passage 81, thereby opening and closing the main valve. When the intensity of pressure of the working fluid at the passage 81 is high, the open-close section 90 compresses the second elastic element 68, causing the open-close section 90 to separate from the main valve seat 80, so that the main valve opens. When the intensity of pressure of the working fluid at the passage 81 is low, the second elastic element 68 presses against the open-close section 90, causing the open-close section 90 to come into contact with the main valve seat 80, so that the main valve is closed.

A detailed description of the working process of the solenoid valve 100 is given below:
When the solenoid valve 100 is powered on, the movable spool 31 moves toward the cover 15, driving the pin 33 to compress the first elastic element 32 and driving the sealing gasket 41 fixed to the pin 33 toward the valve member 60 until the sealing gasket 41 abuts against the valve member 60. During this process, the volume of the first cavity 26 increases while the volume of the second cavity 27 decreases. Since the axial through-hole 35 communicates with the pilot chamber 76, the working fluid in the pilot chamber 76 flows into the first cavity 26 via the axial through-hole 35, the radial hole 35a, the second cavity 27, and the groove(s) 31a, until the movement of the movable spool 31 away from the closed axial end 24 of the valve sleeve 21 is limited by the sealing gasket 41 and the valve member 60. When the sealing gasket 41 abuts against the valve member 60, since the force applied by the second elastic element 68 to the brim 66 is greater than or equal to the sum of the force applied by the pin 33 to the valve member 60 through the sealing gasket 41 and the force applied by the first elastic element 32 to the valve member 60 when the solenoid valve 100 is energized, the valve member 60 can be confined within the valve housing 70 by the second elastic element 68, so that the sealing gasket 41 blocks the fluid-passing hole 63. At this point, the working fluid cannot flow out of the solenoid valve 100 through the fluid-passing hole 63 and the through hole 72. Instead, the working fluid can pass through the gap between the open-close section 90 and the main valve seat 80 when the main valve is opened.

When the solenoid valve 100 is powered off, under the reset force of the first elastic element 32, the pin 33 drives the sealing gasket 41 fixed to the pin 33 to move axially away from the valve member 60, thereby opening the fluid passage 63. During this process, the volume of the first cavity 26 decreases while the volume of the second cavity 27 increases. Similarly, since the axial through-hole 35 communicates with the pilot chamber 76, the working fluid in the first cavity 26 flows into the pilot chamber 76 through the groove(s) 31a, the second cavity 27, the radial hole 35a, and the axial through-hole 35. Since the force applied by the second elastic element 68 to the brim 66 is greater than the force applied by the first elastic element 32 to the valve member 60 when the solenoid valve 100 is not energized, the valve member 60 can be confined by the second elastic element 68 within the valve housing 70, preventing the working fluid from flowing out of the valve member 60 through the gap between the brim 66 of the valve member 60 and the valve housing 70. When the sealing gasket 41 moves axially away from the valve member 60 to open the fluid-passing hole 63, the pin 33 drives the movable spool 31 to move axially toward the close axial end 24 of the valve sleeve 21 until the movable spool 31 resets or its movement toward the closed axial end 24 of the valve sleeve 21 is limited by the inner protrusion 25 and/or the pressurizing portion 39a. At this point, the pin 33 also resets. At this stage, the working fluid can flow out of the solenoid valve 100 through the fluid-passing hole 63 and the through hole 72. Additionally, when the main valve is open, the working fluid can flow out of the solenoid valve 100 through the gap between the open-close section 90 and the main valve seat 80.

It can be understood that the valve member 60 may not necessarily be confined within the valve housing 70 by the force that the second elastic element 68 applies to the brim 66. Instead, the valve member 60 can be fixed within the valve housing 70 by an interference fit between the annual wall 61 and the limiting portion 73 of the valve housing 70. In this configuration, the valve member 60 can support the first elastic element 32, and form a support and limiting structure for the second elastic element 68 via the brim 66. This application does not impose any restrictions on this matter.

It can be understood that the solenoid valve 100 can regulate the opening/closing state and opening degree of the fluid-passing hole 63, thereby adjusting the flow rate and velocity of the working fluid entering from the passage 81 and flowing through the through hole 72, and thus adjusting the flow resistance of the working fluid, so that continuous damping control can be achieved.

Another embodiment of the present application further provides a shock absorber. The shock absorber includes the aforementioned solenoid valve 100. In the shock absorber, the solenoid valve 100 is fluidly connected between two fluid chambers of the shock absorber. For example, one of the fluid chambers is connected to passage 81 of solenoid valve 100, and the working fluid flowing out of solenoid valve 100 can flow into the other fluid chamber. The shock absorber can control the flow resistance and flow speed of the working fluid between the two fluid chambers by means of the solenoid valve 100, thereby realizing continuous damping control.

In this application, the pin 33 connected to the movable spool 31 has a valve core function, and the axial through-hole 35 on the pin 33 is in communication with the groove(s) 31a in the movable spool 31, so that the pilot chamber 76 is in communication with the first cavity 26 on the side of the movable spool 31 away from the pin 33. Therefore, when the movable spool 31 and the pin 33 move, the working fluid can flow between the pilot chamber 76 and the first cavity 26, reducing the influence of the working fluid during the movement of the movable spool 31 and the pin 33. In this way, the influence of the working fluid during the movement of the movable spool 31 and the pin 33 can be reduced by a simple structure, thereby simplifying the structure of the solenoid valve 100 and simplifying the assembly of the solenoid valve 100.

This application further reduces the influence of the working fluid on the movement of the movable spool 31 and the pin 33 by keeping the total volume of the first cavity 26 and the second cavity 27 constant, or by reducing the rate of change of their total volume.

It should be noted that the preferred embodiments of the present application are given in the specification and drawings of the present application. However, the present application can be implemented in many different forms and is not limited to the embodiments described in the specification. These embodiments are not intended to serve as additional limitations on the contents of the present application. The purpose of providing these embodiments is to make the understanding of the disclosed contents of the present application more thorough and comprehensive. Moreover, the above-mentioned technical features are further combined with each other to form various embodiments not listed above, which are all deemed to be within the scope of the present application specification. Further, it is obvious to a person skilled in the art that improvements or changes can be made based on the above description, and all such improvements and changes should fall within the scope of protection of the claims attached to the present application.

## Claims

1. A solenoid valve comprising a valve sleeve (21), **characterized in that** the solenoid valve further comprises:
a movable spool (31) housed within the valve sleeve (21) and capable of axial reciprocating motion relative to the valve sleeve (21); the outer peripheral wall of the movable spool (31) is formed with groove(s) (31a) that extends axially and penetrates axially through the movable spool (31);
a first cavity (26) and a second cavity (27) located on opposite sides of the movable spool (31), axially separated and both in communication with the groove(s) (31a);
a pin (33) connected to the movable spool (31), capable of axial reciprocating motion with the movable spool (31), and having the function of a valve core, the pin (33) comprises an axial through-hole (35) that extends axially through the pin (33) but outside of and separate from the groove(s) (31a), and a radial hole (35a) extending radially outward from the pin (33) to connect the axial through-hole (35) with the second cavity (27);
a pilot chamber (76) located on the side of the pin (33) away from the movable spool (31) and capable of communicating with the axial through-hole (35);
wherein the axial through-hole (35), the radial hole (35a), the second cavity (27), and the groove(s) (31a) together form a passage that connects the first cavity (26) with the pilot chamber (76), allowing working fluid to flow through the passage between the pilot chamber (76) and the first cavity (26) as the movable spool (31) and the pin (33) move.

2. The solenoid valve according to claim 1, **characterized in that** the valve sleeve (21) comprises a closed axial end (24), the first cavity (26) is jointly defined by the closed axial end (24) of the valve sleeve (21) and the movable spool (31).

3. The solenoid valve according to claim 1, **characterized in that** the radial hole (35a) is provided at the connection position between the pin (33) and the movable spool (31), and is accommodated in the second cavity (27).

4. The solenoid valve according to claim 1, **characterized in that** the solenoid valve further comprises a valve housing (70) that forms the pilot chamber (76), the valve housing (70) comprises a through hole (72) extending axially through the valve housing (70), the pin (33) comprises a rod which is disposed in the axial direction, fixed to the movable spool (31) and passes through the through hole (72); the rod comprises a tail end connected to the movable spool (31), and a head end with a diameter smaller than the tail end, such that a first shoulder (33a) is formed at the connection position between the head end and the tail end, the maximum outer diameter of the first shoulder (33a) is greater than the inner diameter of the through hole (72), so that the first shoulder (33a) can limit the distance by which the movable spool (31) moves away from the valve sleeve (21).

5. The solenoid valve according to claim 1, **characterized in that** the solenoid valve further comprises a valve housing (70), the valve housing (70) comprises a through hole (72) extending axially through the valve housing (70), the pin (33) comprises a rod which is disposed in the axial direction, fixed to the movable spool (31) and passes through the through hole (72), and a pin head (34) extending from the rod; the pin head (34) comprises a pressurizing portion (39a) whose outer diameter gradually increases along the axial direction from where it continues from the rod, the maximum outer diameter of the pressurizing portion (39a) is greater than the inner diameter of the through hole (72), so that the pressurizing portion (39a) can limit the distance by which the movable spool (31) moves toward the valve sleeve (21).

6. The solenoid valve according to claim 1, **characterized in that** the tail end of the valve sleeve (21) comprises an inner protrusion (25) formed by the end face of the tail end of the valve sleeve (21) protruding inward in the axial direction, and the inner protrusion (25) is configured to limit the distance by which the movable spool (31) moves toward the valve sleeve (21).

7. The solenoid valve according to claim 1, **characterized in that** the size of the first cavity (26) increases as the movable spool (31) moves away from the tail end of the valve sleeve (21), and the size of the second cavity (27) decreases as the movable spool (31) moves away from the tail end of the valve sleeve (21), so as to maintain the total volume of the first cavity (26) and the second cavity (27) unchanged or reduce the rate of change of the total volume; the groove(s) (31a) are two or more in number and arranged at intervals along the circumference of the movable spool (31).

8. The solenoid valve according to claim 1, **characterized in that** the solenoid valve further comprises:
a valve housing (70) that forms the pilot chamber (76), the valve housing (70) comprises a through hole (72) extending axially through the valve housing (70);
a valve member (60) with a valve-seat function accommodated in the valve housing (70), the valve member (60) comprises a cap body (60a), which has an open end and accommodates the pin head (34), and a brim (66) which extends radially outward around the opening of the cap body (60a) and is continuous with the cap body (60a), the opening of the cap body (60a) facing the through hole (72); and
a second elastic element (68) which abuts against the brim (66) in a compressed state, so that the brim (66) is axially pressed against the valve housing (70).

9. The solenoid valve according to claim 8, **characterized in that** the solenoid valve further comprises a sealing element (75), and the valve housing (70) further comprises an annular limiting portion (73) that extends axially from the valve housing (70), is accommodated in the cap body (60a), and abuts against the cap body (60a) in a sealed state via the sealing element (75); the limiting portion (73) and the cap body (60a) together form an accommodating space for accommodating the pin head (34).

10. A shock absorber, **characterized in that** the shock absorber comprises the solenoid valve according to any one of the preceding claims.
